# EUROPÄISCHE PATENTANMELDUNG

(11) **EP 0 968 960 A1**
(43) Veröffentlichungstag der Anmeldung: **05.01.2000**
(21) Anmeldenummer: 99110038.9
(22) Anmeldetag: 21.05.1999
(51) Int. Cl.: C01B 7/19, C01F 11/46, C01F 11/22

(54) **Flussmittelrecycling**

(30) Priorität: 28.05.1998 DE 19823879
(71) Anmelder: Solvay Fluor und Derivate GmbH, D-30173 Hannover (DE)
(72) Erfinder: Seeske-Koyro, Ulrich, 34246 Vellmar (DE); Born, Thomas, 31188 Holle (DE)
(74) Vertreter: Lauer, Dieter, Dr.

(57) **Zusammenfassung**

Flußmittelrückstände des Aluminiumlötverfahrens auf Basis von Fluoraluminaten der Alkalimetalle, insbesondere Kalium und Cäsium, können recycled werden, indem sie dem zur Fluorwasserstoff-Herstellung aus Flußspat und Oleum verwendeten Reaktionsgemisch zugesetzt werden. Der Fluorgehalt wird auf diese Weise wiederverwendbar, der anfallende Anhydrit ist vorteilhaft für übliche Zwecke anwendbar.

## Beschreibung

Die Erfindung bezieht sich auf das Recycling von Flußmittelrückständen aus Lötverfahren auf Basis von Metallfluoraluminaten und Fluorzinkaten.

Beim Löten, insbesondere von Aluminium und Aluminiumlegierungen, werden Flußmittel auf Basis von Metallfluormetallaten, z. B. auf Basis von Alkalimetallfluorzinkaten und besonders von Alkalimetallfluoraluminaten eingesetzt. Besonders gut geeignet sind Fluoraluminate, die Kalium und/oder Cäsium umfassen. Ein erheblicher Teil des zum Löten eingesetzten Flußmittels wird nicht verbraucht, sondern verbleibt in Leitungen oder Apparaturen. Ein weiterer Teil der Rückstände resultiert aus der eventuell durchgeführten Reinigung der verlöteten Gegenstände, aus verbrauchter Flußmittelsuspension und aus dem regelmäßig durchgeführten Reinigen von Vorratstanks. Bislang wurden diese Flußmittelrückstände nicht wieder verwendet.

Aufgabe der vorliegenden Erfindung ist es, ein Verfahren anzugeben, mit welchem die nutzbringende Wiederverwendung der Flußmittelrückstände möglich ist. Diese Aufgabe wird durch das in den Ansprüchen angegebene Verfahren gelöst.

Die Erfindung beruht auf der Erkenntnis, daß die Flußmittelrückstände mit Vorteil dem Flußspat zugesetzt werden können, welcher mit Oleum unter Bildung von Fluorwasserstoff und CaSO₄ umgesetzt wird.

Erfindungsgemäß werden die Flußmittelrückstände auf Basis von Alkalimetallen von Fluoraluminaten oder auf Basis von Alkalimetallen von Fluorzinkaten als Zusatz zu Flußspat bei der Herstellung von Fluorwasserstoff aus Flußspat und Oleum verwendet.

Bei geringer zugesetzter Menge können die Rückstände mit mehr oder weniger hohem Wassergehalt beigemischt werden, wie sie anfallen. Man kann sie auch vorher weitgehend von Wasser befreien, z. B. in Filterpressen. Die zugesetzten Flußmittelrückstände werden vorteilhaft weitgehend von Wasser befreit oder trocken eingesetzt, können aber gewünschtenfalls noch Kristallwasser enthalten.

Zweckmäßig setzt man die Flußmittelrückstände, auf ihre Trockenmasse bezogen, in einer Menge von bis zu 2 Gew.-%, vorzugsweise 0,35 Gew.-% bis 1 Gew.-%, bezogen auf die als 100 Gew.-% gesetzte Trockenmasse des Flußspats inklusive der Flußmittelrückstände zu.

Das Verfahren eignet sich besonders für Flußmittelrückstände auf Basis von Kalium- und/oder Cäsiumfluoraluminaten, wie KAlF₄, K₂AlF₅ oder K₂AlF₅-Hydrat. Die US-Patente 4,670,067 und 5,318,764 offenbaren Herstellung und Anwendung solcher Flußmittel. Die Flußmittelrückstände können auch ZnF₂ enthalten, das entsprechend der US-A 4,645,119 als Korrosionsschutz im Flußmittel enthalten ist. Solche Flußmittelrückstände fallen insbesondere beim Löten von Aluminium oder Aluminiumlegierungen an.

Auch Flußmittelrückstände auf Basis von Kalium- und/oder Cäsiumfluorzinkat, wie in der DE 198 13 023 (nicht vorveröffentlicht) beschrieben, können erfindungsgemäß eingesetzt werden, natürlich auch Gemische von Fluoraluminat- und Fluorzinkat-Fluxen.

Gegebenenfalls können die Flußmittelrückstände auch zusätzlich noch Alkalifluorsilikat enthalten, wie dies bei bestimmten Fluxen der Fall sein kann, siehe die DE 196 36 897 und die EP-A 810 057 (US-A 5,785,770). Die japanische Patentanmeldung 08/267229 offenbart, daß auch Flußmittel aus AlF₃ und K₂SiF₆ brauchbare Lötungen ergeben. Die Verwendung von Flußmittel-Rückständen aus diesem Verfahren (die ja Kaliumionen, Aluminium- und Fluorionen enthalten) wird ebenfalls als Ausführungsform unserer Erfindung angesehen.

Ein Vorteil der erfindungsgemäßen Verwendung ist, daß die Verfahrensweise bei der Fluorwasserstoffherstellung nicht modifiziert werden muß, man kann wie im Stand der Technik beschrieben arbeiten.

Gattungsgemäße Verfahren sind beispielsweise in der deutschen Offenlegungsschrift 22 09 960, 24 35 512, der Schweizer Patentschrift 540 195 und der internationalen Patentanmeldung WO 82/03848 offenbart. Dabei wird Flußspat mit Schwefelsäure oder besser Oleum in einem beheizten Reaktionsgefäß, beispielsweise einem Drehrohrofen, umgesetzt. Die Reaktion kann durch Erhitzen des Reaktionsgemisches auf Temperaturen von bis zu 350° vervollständigt werden. Das Fluorwasserstoffgas, welches freigesetzt wird, wird in bekannter Weise gereinigt. Weiteres, brauchbares Produkt ist CaSO₄ (Anhydrit). Dabei wandeln sich Fluoraluminate in Alaun (oder Kaliumionen und Aluminiumionen sowie Sulfationen enthaltende Verbindungen) um, Zinkate in Zinksulfat und Silikate in H₂SiF₆, die ausgetrieben und aufgearbeitet wird. Die Alkalimetallionen verbleiben (als Sulfat) im Änhydrit.

Vorteile der erfindungsgemäßen Verwendung sind außerdem, daß die Flußmittelrückstände als Wertstoff verwendet werden und daß der Zusatz der Flußmittelrückstände dazu führt, daß beim gebildeten Calciumsulfat eine beschleunigte Verfestigung beobachtet werden kann.

Als Beschleuniger wird dem Anhydrit beispielsweise KAl(SO₄)₂-Hydrat oder Zinksulfat zugesetzt, so daß hier entsprechend Rohstoff eingespart werden kann.

Das erfindungsgemäße Verfahren wird so durchgeführt, daß bei der bekannten HF-Herstellung die gewünschte Menge an Flußmittelrückstand vor oder im Drehrohrofen beigemischt wird.

Ein weiterer Gegenstand der Erfindung ist Flußspat mit zugesetzten Flußmittelrückständen auf Basis von Alkalimetallen von Fluoraluminaten oder auf Basis von Alkalimetallen von Fluorzinkaten oder deren Gemischen, die gegebenenfalls noch übliche Zusätze wie Alkalimetallfluorsilikat enthalten können.

Anhydrit mit einem zusätzlichen Gehalt an Kationen, resultierend aus der Verwendung von Flußmittelrückständen auf Basis von Alkalimetallfluoraluminat, insbesondere Kaliumfluoraluminat, und/oder Alkalimetallfluorzinkat, vorzugsweise Kaliumfluorzinkat, sind ebenfalls Gegenstand der vorliegenden Erfindung. Besonders bevorzugt ist Anhydrit, hergestellt aus Flußspat und Schwefelsäure oder Oleum mit einem zusätzlichen Gehalt an Kaliumionen, Aluminiumionen sowie gegebenenfalls Cäsium- und/oder Zinkionen in Form der Sulfate, erhältlich durch Verwendung von Flußmittelrückständen auf Basis von Kaliumfluoraluminat.

## Patentansprüche

1. Verwendung von Flußmittelrückständen auf Basis von Alkalimetallen von Fluoraluminaten oder auf Basis von Alkalimetallen von Fluorzinkaten als Zusatz zu Flußspat bei der Herstellung von Fluorwasserstoff und CaSO₄ aus Flußspat und Oleum.

2. Verwendung nach Anspruch 1, dadurch gekennzeichnet, daß man Flußmittelrückstände auf Basis von Fluoraluminaten des Kaliums und/oder Cäsiums einsetzt.

3. Verwendung nach Anspruch 1, dadurch gekennzeichnet, daß man die Flußmittelrückstände in einer Menge von bis zu 2 Gew.-%, bezogen auf den Feststoffgehalt des Flußspats einsetzt.

4. Verwendung nach Anspruch 3, dadurch gekennzeichnet, daß man die Flußmittelrückstände in einer Menge von 0,35 Gew.-% bis 1 Gew.%, bezogen auf den Feststoffgehalt der Reaktionsmischung, einsetzt.

5. Verwendung nach Anspruch 1, dadurch gekennzeichnet, daß man die Flußmittelrückstände im wesentlichen von Wasser befreit einsetzt.

6. Verwendung nach Anspruch 1, dadurch gekennzeichnet, daß man Flußmittelrückstände auf Basis von Alkalimetallen von Fluoraluminaten einsetzt, die zusätzlich Alkalifluorsilikat und/oder Alkalifluorzinkat enthalten.

7. Flußspat mit zugesetzten Flußmittelrückständen auf Basis von Alkalimetallen von Fluoraluminaten oder auf Basis von Alkalimetallen von Fluorzinkaten.

8. Anhydrit, hergestellt aus Flußspat und Schwefelsäure, mit einem zusätzlichen Gehalt an Kaliumionen, Aluminiumionen und gegebenenfalls Cäsiumionen und/oder Zinkionen in Form der Sulfate, erhältlich durch Verwendung von Flußmittelrückständen auf Basis von Kaliumfluoraluminat gemäß einem der Ansprüche 1 bis 6.
